# EUROPÄISCHE PATENTSCHRIFT

(11) **EP 0 491 334 B1**
(45) Veröffentlichungstag und Bekanntmachung des Hinweises auf die Patenterteilung: **22.11.1995**
(21) Anmeldenummer: 91121553.1
(22) Anmeldetag: 16.12.1991
(51) Int. Cl.: F16K 17/16, B65D 90/36

(54) **Schutzeinrichtung für Druckbehälter**
Protection device for pressure vessel
Dispositif de protection pour récipient de pression

(30) Priorität: 18.12.1990 DE 4040427
(43) Veröffentlichungstag der Anmeldung: 24.06.1992
(73) Patentinhaber: MASCHINEN- UND MÜHLENBAU WITTENBERG GmbH, D-06876 Lutherstadt Wittenberg (DE)
(72) Erfinder: Schilling, Marita, O-4600 Wittenberg (DE)
(74) Vertreter: Grünecker, Kinkeldey, Stockmair & Schwanhäusser Anwaltssozietät

(56) Entgegenhaltungen:
- GB-A- 897 723
- GB-A- 1 033 035
- US-A- 2 895 492
- VDI Richtlinien 3673, Juni 1979

## Beschreibung

Die vorliegende Erfindung betrifft eine Schutzeinrichtung mit einer Druckentlastungsvorrichtung für Druckbehälter, deren Betriebsunterdruck zumindest zeitweilig betragsmäßig dem Ansprechdruck der Druckentlastungsvorrichtung entspricht, wobei die Druckentlastungsvorrichtung ein den Innenraum des Druckbehälters mit der Außenatmosphäre verbindendes Entlastungsrohr und ein Berstelement in einem Druckentlastungs-Strömungsweg des Entlastungsrohres aufweist.

Eine Schutzeinrichtung der vorgenannten Art ist für Druckbehälter vorgesehen, deren Betriebsdruck im Unterdruckbereich liegt und bei denen die Gefahr unzulässiger Druckerhöhungen besteht.

Zum Schutz vor plötzlichen Druckerhöhungen, z.B. aufgrund von Explosionen, in Druckbehältern sind Schutzeinrichtungen bekannt, durch die die entstehende Entlastungs- bzw. Explosionsdruckwelle nach außen in die Atmosphäre abgeleitet wird. Die Druckwelle muß dabei eine Soll-Bruchstelle passieren, durch die sie in die freie Atmosphäre gelangt. Befinden sich derartige Druckbehälter und Apparaturen in geschlossenen Räumen, so ist der Soll-Bruchstelle eine Rohrleitung als Entlastungsrohr nachgeordnet, die die Druckwelle und die entstehenden Rückstände, wie z.B. Verbrennungsrückstände bei Staubexplosionen, ins Freie abführt.

Derartige Soll-Bruchstellen werden in herkömmlicher Weise als Berstelemente oder Druckentlastungsklappen gestaltet. Die Berstelemente können dabei als Berstplatte oder als Berstmembran ausgeführt werden (VDI-Richtlinie 3673 vom Juni 1979). Beiden konstruktiven Lösungen ist gemeinsam, daß sie beim Erreichen des Ansprechdruckes zerstört werden. Bei Berstplatten, die aus spröden Werkstoffen bestehen, werden dabei die Bruchstücke mit ins Freie geschleudert. Berstmembranen hingegen zerreißen beim Entlastungsvorgang, ohne daß Membranstücke ins Freie gelangen. Daher sind Berstmembranen insbesondere für Druckbehälter und Apparaturen geeignet, bei denen der Explosions- bzw. Entlastungsdruck mittels Rohrleitungen ins Freie geleitet werden muß.

Druckentlastungsklappen werden beim Erreichen des Ansprechdruckes nicht zerstört. Der Explosions- bzw. Entlastungsdruck öffnet die Druckentlastungsklappe, so daß die Druckwelle ins Freie gelangt. Nach dem Entlastungsvorgang schließt die Druckentlastungsklappe selbsttätig. Hierdurch wird verhindert, daß Sauerstoff in den Druckbehälter bzw. die Apparatur einströmt und die Gefahr von Folgeexplosionen vergrößert.

In bestimmten Anwendungsfällen, z.B. in der Verarbeitungstechnik für staub- oder teilchenförmiges Material, wie z.B. in der Nahrungsgüter-Verarbeitungstechnik, werden Anlagen betriebsmäßig mit Unterdruck betrieben. Dieser Vakuum-Betriebsdruck ist in manchen Fällen so hoch, daß er den Absolutwert des Ansprechdruckes der zugehörigen Druckentlastungseinrichtung erreichen kann.

Für diesen Fall, bei dem der Betriebsunterdruck des Druckbehälters bzw. der Apparatur betragsmäßig den Ansprechdruck der Druckentlastungseinrichtung zeitweilig oder beständig erreicht, sind Berstelemente der herkömmlichen Art ungeeignet, da diese bei Erreichen des kritischen Betriebsunterdruckes sofort der Zerstörung unterliegen würden. Es ist daher bereits vorgeschlagen worden, Berstmembranen mit Vakuumstützen zu versehen. Diese Vakuumstützen bilden im Prinzip Kunststoffnetze oder -gitter, die die jeweilige Berstmembran vakuumseitig abstützen. Auf diese Weise kann zwar die Lebensdauer der Berstmembran erhöht werden, die abzudeckende Fläche vergrößert sich jedoch erheblich. Die Funktion derartiger Vakuumstützen bleibt überdies dennoch kritisch, da die Berstmembran ständig einer Belastung in Höhe des Ansprechdruckes unterliegt, so daß die Gefahr unerwünschten Ansprechens der Berstmembran nicht völlig ausgeschlossen werden kann.

Bei Verwendung einer Druckentlastungsklappe muß die Entlastungsleitung die gesamte Druckentlastungsklappe einschließen, so daß sich der Querschnitt der Druckentlastungsleitung in unerwünschter Weise auf ein Mehrfaches des erforderlichen Druckentlastungsquerschnittes erhöht.

Überdies ist es nur mit beträchtlichem fertigungstechnischen Aufwand möglich, den Anschluß der ebenen Druckentlastungsklappe an einen Druckbehälter mit üblicherweise gekrümmter Oberfläche herzustellen, ohne daß unerwünschte Staubablagerungsflächen entstehen. Da bei Druckbehältern im allgemeinen zylinder- oder kegelförmige Behälter vorherrschend sind, bereitet der Einsatz einer Druckentlastungsklappe in diesem Bereich Schwierigkeiten.

Der Erfindung liegt daher die Aufgabe zugrunde, eine Schutzeinrichtung für Druckbehälter der eingangs genannten Art zu schaffen derart, daß eine zuverlässige Funktion derselben auch dann gewährleistet ist, wenn innerhalb des zugehörigen Druckbehälters ein Betriebuntersdruck vorhanden ist, dessen Absolutwert dem Ansprechdruck der Druckentlastungseinrichtung entspricht.

Diese Aufgabe wird durch die kennzeichnenden Merkmale des Anspruchs 1 gelöst.

Auf diese Weise wird das Berstelement, z.B. eine Berstmembran, zuverlässig vor der zeitweiligen oder andauernden kritischen Grenzbelastung durch den Vakuum-Betriebsdruck geschützt, da dieser direkt und unter Überbrückung des Berstelementes zur Herstellung eines Druckausgleichs stromauf und stromab des Berstelements an das Entlastungsrohr bzw. die im Hinblick auf die Betriebsunterdruckbelastung unkritische Druckentlastungsklappe geführt wird, während gleichzeitig dafür Sorge getragen ist, daß im Fehlerfall, d.h. bei plötzlichem Druckantrieb innerhalb des Druckbehälters (Explosionsdruck) dieser aufgrund der Strömungswiderstandsverhältnisse zwischen Entlastungsrohr und Druckausgleichskanal praktisch in vollem Umfang an dem Berstelement anliegt und unter Zerstörung desselben über das angeschlossene Entlastungsrohr abgeführt wird.

Vorzugsweise ist das Berstelement eine Berstmembran und ist die Druckentlastungsklappe am stromabseitigen Ende des Entlastungsrohres angeordnet.

Eine besonders einfache Konstruktion ergibt sich dadurch, daß der Querschnitt des Entlastungsrohres ein Mehrfaches des Querschnittes des Druckausgleichkanales aufweist, vorzugsweise das Verhältnis der Querschnitte von Entlastungsrohr und Druckausgleichskanal im Bereich von 10:1 bis 50:1 liegt.

Weitere, bevorzugte Ausgestaltungen des Erfindungsgegenstandes sind in den übrigen Unteransprüchen dargelegt.

Der besondere Vorteil der erfindungsgemäßen Schutzeinrichtung liegt darin, daß durch die erfindungsgemäße Druckentlastungseinrichtung eine funktionssichere und zugleich wirtschaftliche Lösung für diejenigen Fälle gefunden wurde, bei denen ein Berstelement, insbesondere eine Berstmembran in Verbindung mit einem Entlastungsrohr zum Schutz eines Vakuumbehälters verwendet wird, wobei der Vakuum-Betriebsdruck innerhalb des Druckbehälters in seinem Absolutwert im Bereich des Ansprechdruckes des Berstelementes, insbesondere der Berstmembran, liegt. Überdies wird einerseits der staubdichte Abschluß des Druckbehälters gegenüber dem Entlastungsrohr durch die Berstmembran gesichert, andererseits ist das Ende der Entlastungsleitung vor Umwelteinflüssen aus der Atmosphäre geschützt und die Berstmembran ist vollständig von der Unterdruckbelastung durch den Betriebsdruck des Druckbehälters befreit.

Die Erfindung wird nachstehend anhand eines Ausführungsbeispieles und zugehöriger Zeichnungen näher erläutert. In diesen zeigen:
- Fig. 1: eine schematische Darstellung eines als Schlauchabscheider ausgebildeten Druckbehälters mit der Schutzeinrichtung nach einem Ausführungsbeispiel der vorliegenden Erfindung,
- Fig. 2: eine Draufsicht nach Fig. 1 (schematisch).

In dem vorliegenden Ausführungsbeispiel wird die Schutzeinrichtung anhand einer Verwendung in Verbindung mit einem in der Verarbeitungsindustrie üblichen Schlauchabscheider erläutert. Derartige Einrichtungen werden überall dort angewandt, wo Luft zu reinigen ist, wie z.B. in Saatgutaufbereitungsanlagen, in Mühlen oder in der Mischfutterindustrie.

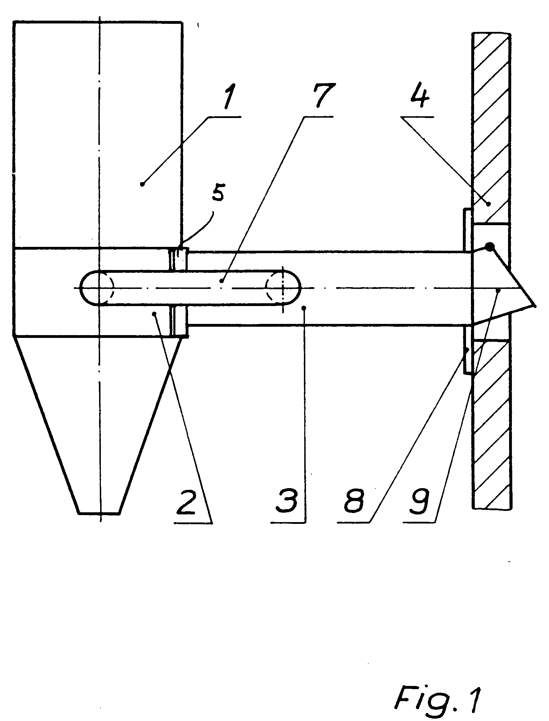

Wie aus Fig. 1 ersichtlich ist, ist am unteren Ende eines zylindrischen Teiles des als Vakuum-Druckbehälter ausgelegten Schlauchabscheiders 1 ein Segment 2 angeordnet, an dem unter Einsatz einer Berstmembran 5 ein Entlastungsrohr 3 angeflanscht ist. Das Entlastungsrohr 3 verläuft vorzugsweise waagerecht und verbindet den Innenraum des Schlauchabscheiders 1 mit der freien Außenatmosphäre außerhalb einer Außenwand 4 des den Schlauchabscheider 1 aufnehmenden Gebäudes. Die Verbindung zwischen dem Entlastungsrohr 3 und dem Segment 2 des Schlauchabscheiders 1 ist so gestaltet, daß die Aufspannung der Berstmembran 5, die einen definierten Ansprechdruck aufweist, gewährleistet ist.

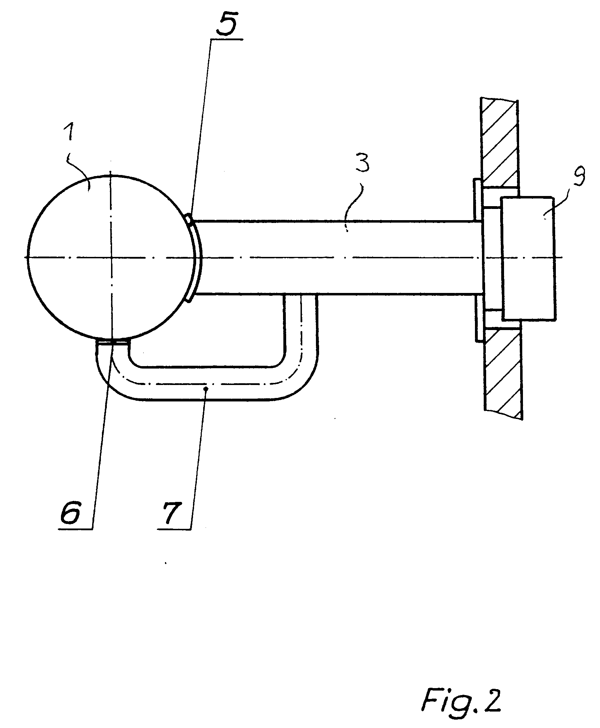

Wie genauer in Fig. 2 gezeigt ist, ist der Innenraum des Schlauchabscheiders 1 über einen Druckausgleichskanal 7 kommunizierend und die Berstmembran 5 überbrückend mit dem Entlastungsrohr 3 stromab der Berstmembran 5 kommunizierend verbunden, wobei der Anschluß des Druckausgleichskanales 7 an den Schlauchabscheider 1 über einen Filter 6 erfolgt. Die Verwendung des Filters 6 gewährleistet den erforderlichen staubdichten und luftdurchlässigen Anschluß des Druckausgleichskanales 7.

Wie die Fig. 1 und 2 auch hinsichtlich des Verlaufes des Druckausgleichskanales 7 verdeutlichen, ist der Querschnitt des Druckausgleichskanales 7 wesentlich geringer als derjenige des Entlastungsrohres 3. Als besonders vorteilhaft hat sich ein Verhältnis der Querschnittsflächen des Entlastungsrohres 3 zu der Querschnittsfläche des Druckausgleichskanales 7 von 10:1 bis 50:1 erwiesen.

Das stromabseitige, dem Schlauchabscheider 1 abgewandte Ende des Entlastungsrohres 3 stützt sich über einen Rahmen 8 in einer Öffnung der Außenwand 4 des den Schlauchabscheider 1 umgebenden Gebäudes ab. Dieser Rahmen 8 trägt eine herkömmliche, luftdicht verschließende Druckentlastungsklappe 9, die das Entlastungsrohr 3 gegen den Außenluftdruck abdichtet und zugleich die Abführung einer Druckwelle aus dem Entlastungsrohr 3 in die freie Atmosphäre nach außen gestattet.

Die Schutzeinrichtung nach diesem Ausführungsbeispiel besitzt die nachfolgend erläuterte Funktionsweise. Der Schlauchabscheider 1 wie auch bei vergleichbaren Druckbehältern und Apparaturen der vorbeschriebenen Gattung arbeitet regelmäßig mit einem Vakuum-Betriebsdruck, der hinsichtlich seines Absolutwertes zeitweise oder beständig den Ansprechdruck der Berstmembran 5 erreicht. Dieser regelmäßige Betriebsunterdruck wird aus dem Innenraum des Schlauchabscheiders 1 zugleich über den Druckausgleichskanal 7 an das Entlastungsrohr 3 und damit an den Druckraum stromab der Berstmembran 5 gelegt, so daß stromauf und stromab der Berstmembran 5 im Normalbetrieb des Schlauchabscheiders 1 im wesentlichen gleicher Unterdruck herrscht und somit die Druckdifferenz über die Berstmembran 5 gegen Null geht, so daß die Berstmembran 5 völlig druckentlastet ist. Die Druckentlastungsklappe 9, die als Rückschlag-Dichtungsventil wirksam ist und das Entlastungsrohr 3 gegen den äußeren Luftdruck luftdicht abschließt, zugleich aber die Abführung jedes Überdruckes aus dem Entlastungsdruckrohr nach außen gestattet, beseitigt überdies die Einwirkung von Umwelteinflüssen.

Entzündet sich nun ein im Schlauchabschnitt 1 befindliches explosives Gemisch, z.B. ein Staub/Luft-Gemisch, so bewirkt die Druckwelle das Zerreißen der Berstmembran 5, da bedingt durch den wesentlich geringeren Querschnitt des Druckausgleichskanales 7 und dem damit einhergehenden, gegenüber dem Entlastungsrohr 3 beträchtlich größeren Strömungswiderstand der Explosionsdruck zunächst praktisch in voller Höhe an der Berstmembran anliegt. Anschließend wird die Druckwelle durch das Entlastungsrohr 3 und die unter Überdruck öffnende Druckentlastungsklappe 9 in die Außenatmosphäre abgeleitet.

Die Erfindung ist selbstverständlich nicht auf die vorliegende Ausführungsform beschränkt, vielmehr kann der Fachmann auch andere Druckausgleichsmechanismen und -vorrichtungen anwenden, um einerseits stromauf und stromab eines in Verbindung mit einem Druckbehälter und einem Entlastungsrohr als Sicherheitselement des Druckbehälters vorgesehenen Berstelementes den gleichen Betriebsunterdruck einzustellen und damit das Berstelement von Betriebsunterdruckbeanspruchungen freizuhalten, zugleich aber dafür Sorge zu tragen, daß ein gefährlicher Überdruck stets zur Zerstörung des Berstelementes führt, so daß die Sicherheitsfunktion des Berstelementes durch die Druckausgleichsvorrichtung nicht beeinträchtigt wird.

## Patentansprüche

1. Schutzeinrichtung mit einer Druckentlastungsvorrichtung für Druckbehälter, deren Betriebsunterdruck zumindest zeitweilig betragsmäßig dem Ansprechdruck der Druckentlastungsvorrichtung entspricht, wobei die Druckentlastungsvorrichtung ein den Innenraum des Druckbehälters (1) mit der Außenatmosphäre verbindendes Entlastungsrohr (3) und ein Berstelement (5) in einem Druckentlastungsströmungsweg des Entlastungsrohres aufweist, **dadurch gekennzeichnet,** daß zwischen dem Innenraum des Druckbehälters (1) und dem Entlastungsrohr (3) eine in einer Bypaß-Anordnung das Berstelement überbrückende Druckausgleichseinrichtung (7) angeordnet und das Entlastungsrohr (3) mit der Außenatmosphäre durch ein Überdruck-Einwegströmungsventil (9) verbunden ist.

2. Schutzeinrichtung nach Anspruch 1, **dadurch gekennzeichnet**, daß die Druckausgleichseinrichtung ein Druckausgleichskanal (7) ist, dessen Strömungswiderstand größer ist als der Strömungswiderstand des Entlastungsrohres (3).

3. Schutzeinrichtung nach Anspruch 1 oder 2**, dadurch gekennzeichnet**, daß der Querschnitt des Entlastungsrohres (3) ein Mehrfaches des Querschnittes des Druckausgleichskanales (7) beträgt.

4. Schutzeinrichtung nach Anspruch 3, dadurch gekennzeichnet, daß ein Verhältnis der Querschnitte von Entlastungsrohr (3) und Druckausgleichskanal (7) im Bereich von 10:1 bis 50:1 liegt.

5. Schutzeinrichtung nach zumindest einem der vorhergehenden Ansprüche 1 bis 4, **dadurch gekennzeichnet**, daß das Berstelement eine zwischen dem Druckbehälter (1) und dem Entlastungsrohr (3) angeordnete Berstmembran (5) ist.

6. Schutzeinrichtung nach zumindest einem der vorhergehenden Ansprüche 1 bis 5**, dadurch gekennzeichnet**, daß das Überdruck-Einwegventil ein am stromabseitigen Ende des Entlastungsrohres (3) angeordnete Druckentlastungsklappe (9) ist.

7. Schutzeinrichtung nach zumindest einem der vorhergehenden Ansprüche 2 bis 6**, dadurch gekennzeichnet**, daß im Verbindungsbereich zwischen dem Druckbehälter (1) und dem Druckausgleichskanal (7) ein Filter (6) angeordnet ist.

## Claims

1. Protective device having pressure relief means for pressurised containers, the operational underpressure of which corresponds at least intermittently to the level of the response pressure of the pressure relief means, the pressure relief means having a relief tube (3) connecting the interior of the pressurised container (1) to the outer atmosphere and a bursting element (5) in a pressure relief flow path of the relief tube, characterised in that, between the interior of the pressurised container (1) and the relief tube (3), there is a pressure equalising device (7) in a bypass arrangement bridging the bursting element and the relief tube (3) is connected to the outer atmosphere through a one-way overpressure valve (9).

2. Protective device according to claim 1, characterised in that the pressure equalising device is a pressure equalising channel (7) the flow resistance of which is greater than the flow resistance of the relief tube (3).

3. Protective device according to claim 1 or 2, characterised in that the cross section of the relief tube (3) is a multiple of the cross section of the pressure equalising channel (7).

4. Protective device according to claim 3, characterised in that a ratio of the cross sections of the relief tube (3) and pressure equalising channel (7) is in the range from 10 : 1 to 50 : 1.

5. Protective device according to at least one of the preceding claims 1 to 4, characterised in that the bursting element is a bursting membrane (5) arranged between the pressure container (1) and the relief tube (3).

6. Protective device according to at least one of the preceding claims 1 to 5, characterised in that the one-way overpressure valve is a pressure relief valve (9) arranged at the downstream end of the relief tube (3).

7. Protective device according to at least one of the preceding claims 2 to 6, characterised in that a filter (6) is arranged in the connecting area between the pressurised container (1) and the pressure equalising channel (7).

## Revendications

1. Dispositif de protection, comportant un dispositif de détente de pression pour un récipient sous pression, dont la dépression de fonctionnement correspond du moins temporairement en valeur à la pression de réponse du dispositif de détente de pression, et le dispositif de détente de pression présente un tube de détente (3) qui relie la chambre intérieure du récipient sous pression (1) à l'atmosphère extérieure, et un élément d'éclatement (5) dans un trajet d'écoulement de la détente de pression du tube de détente, caractérisé en ce qu'il est prévu entre la chambre intérieure du récipient sous pression (1) et le tube de détente (3) un dispositif de compensation de pression (7) qui ponte l'élément d'éclatement dans un agencement de dérivation, et en ce que le tube de détente (3) est relié à l'atmosphère extérieure via une soupape d'écoulement unidirectionnelle (9) pour la surpression.

2. Dispositif de protection selon la revendication 1, caractérisé en ce que le dispositif de compensation de pression est un canal de compensation de pression (7), dont la résistance à l'écoulement est supérieure à la résistance à l'écoulement du tube de détente (3).

3. Dispositif de protection selon l'une ou l'autre des revendications 1 et 2, caractérisé en ce que la section transversale du tube de détente (3) s'élève à un multiple de la section transversale du canal de compensation de pression (7).

4. Dispositif de protection selon la revendication 3, caractérisé en ce que le rapport des sections transversales du tube de détente (3) et du canal de compensation de pression (7) se trouve dans la plage de 10:1 à 50:1.

5. Dispositif de protection selon l'une au moins des revendications précédentes 1 à 4, caractérisé en ce que l'élément d'éclatement est une membrane d'éclatement (5) agencée entre le récipient sous pression (1) et le tube de détente (3).

6. Dispositif de protection selon l'une au moins des revendications précédentes 1 à 5, caractérisé en ce que la soupape unidirectionnelle pour la surpression est un clapet de détente de pression (9) agencé à l'extrémité aval du tube de détente (3).

7. Dispositif de protection selon l'une au moins des revendications précédentes 2 à 6, caractérisé en ce qu'il est prévu un filtre (6) dans la région de liaison entre le récipient sous pression (1) et le canal de compensation de pression (7).
